# EUROPÄISCHE PATENTSCHRIFT

(11) **EP 2 400 713 B1**
(45) Veröffentlichungstag und Bekanntmachung des Hinweises auf die Patenterteilung: **22.08.2018**
(21) Anmeldenummer: 11000197.1
(22) Anmeldetag: 12.01.2011
(51) Int. Cl.: H04L 29/06, H04B 7/185, G06F 9/445

(54) **Funkgerät mit direktem Signalpfad**
Wireless device with direct signal path
Appareil radio doté d'une trajectoire de signal directe

(30) Priorität: 23.06.2010 DE 102010024706
(43) Veröffentlichungstag der Anmeldung: 28.12.2011
(73) Patentinhaber: Rohde & Schwarz GmbH & Co. KG, 81671 München (DE)
(72) Erfinder: Greubel, Gerhard, 83059 Kolbermoor (DE); Verbesek, Lars, 82054 Sauerlach (DE); Hams, Christian, 83533 Edling (DE)
(74) Vertreter: Körfer, Thomas

(56) Entgegenhaltungen:
- EP-A1- 2 081 304
- EP-A2- 1 429 118
- DE-A1-102005 050 174
- US-A1- 2010 146 497
- BRIAN C BOORMAN ET AL: "A Scalable Hardware Architecture to Support Applications of the HAIPE 3.1 Standard", MILITARY COMMUNICATIONS CONFERENCE, 2007. MILCOM 2007. IEEE, IEEE, PISCATAWAY, NJ, USA, 29. Oktober 2007 (2007-10-29), Seiten 1-8, XP031232786, ISBN: 978-1-4244-1512-0
- SKALKA R J ET AL: "A full-function tactical radio for UHF SATCOM", TACTICAL COMMUNICATIONS CONFERENCE, 1992. VOL. 1 TACTICAL COMMUNICATIO NS: TECHNOLOGY IN TRANSITION., PROCEEDINGS OF THE FORT WAYNE, IN, USA 28-30 APRIL 1992, NEW YORK, NY, USA,IEEE, US, 28. April 1992 (1992-04-28), Seiten 211-220, XP010066454, DOI: 10.1109/TCC.1992.247143 ISBN: 978-0-7803-0745-2
- DANIEL R OLDHAM ET AL: "JTRS/SCA and Custom/SDR Waveform Comparision", MILITARY COMMUNICATIONS CONFERENCE, 2007. MILCOM 2007. IEEE, IEEE, PISCATAWAY, NJ, USA, 29. Oktober 2007 (2007-10-29), Seiten 1-5, XP031232737, ISBN: 978-1-4244-1512-0

## Beschreibung

Die Erfindung betrifft ein Funkgerät, insbesondere ein rekonfigurierbares softwarebasiertes Funkgerät mit einem direkten Signalpfad.

Herkömmlich verfügen verschlüsselnde Funkgeräte über eine rote Seite, d.h. einen Verarbeitungsabschnitt, welcher unverschlüsselte Daten verarbeitet, eine Verschlüsselungseinrichtung und eine schwarze Seite, d.h. eine Verarbeitungseinrichtung, welche verschlüsselte Daten verarbeitet. Um Daten mit einem solchen Funkgerät zu übertragen, müssen diese Daten eine aufwendige Verarbeitung durchlaufen. Insbesondere die Verschlüsselung durch die Verschlüsselungseinrichtung erfordert dabei nennenswerte Verarbeitungszeit. Dies resultiert in einer Übertragungsverzögerung.

So zeigt die Druckschrift DE 10 2005 050 174 A1 ein Kommunikationsnetz, welches ein Verschlüsselungsmodul einsetzt. Weiterer einschlägiger Stand der Technik ist in den Druckschriften US2010/1146497 und EP1429118 offenbart. Bestimmte Einsatzzwecke einer Datenübertragung erfordern jedoch eine möglichst geringe Übertragungsverzögerung. Der Erfindung liegt die Aufgabe zugrunde, ein Funkgerät zur verschlüsselten Kommunikation zu schaffen, welches zusätzlich Nachrichten ohne sie zu verschlüsseln mit einer sehr geringen Übertragungsverzögerung übermitteln kann.

Die Aufgabe wird erfindungsgemäß für das Funkgerät durch die Merkmale des unabhängigen Anspruchs 1 gelöst.

Ein erfindungsgemäßes Funkgerät weist zumindest einen Mehrzweckprozessor, eine Verschlüsselungseinrichtung, einen digitalen Signalprozessor und optional eine feldprogrammierbaren Gatterschaltung auf. Das Funkgerät nutzt dabei einen verschlüsselnden Signalpfad und einen nicht verschlüsselnden Signalpfad. In dem nicht verschlüsselnden Signalpfad kommt außerhalb der Verschlüsselungseinrichtung kein Mehrzweckprozessor vor. Da insbesondere die Verarbeitung von Signalen in Mehrzweckprozessoren hohe Verarbeitungsverzögerungen verursachen, wird so eine deutliche Reduktion der Verarbeitungsverzögerung bei Nutzung des nicht verschlüsselnden Signalpfads erzielt.

Beide Signalpfade laufen dabei bevorzugt über die Verschlüsselungseinrichtung. Signale, welche über den nicht verschlüsselnden Signalpfad übertragen werden, werden dann von der Verschlüsselungseinrichtung jedoch nicht verschlüsselt oder entschlüsselt, sondern lediglich überwacht. Die Verschlüsselung und Entschlüsselung verursachen eine nennenswerte Verarbeitungsverzögerung. Durch den Verzicht auf die Verschlüsselung und Entschlüsselung wird diese somit deutlich reduziert. Durch Führung auch des nicht verschlüsselnden Signalpfads über die Verschlüsselungseinrichtung und die Überwachung der Signale wird eine besonders hohe Sicherheit der Übertragung erreicht. So kann überwacht werden, welche Signale mittels welcher Wellenformen übertragen werden. Insbesondere kann die Verschlüsslungseinrichtung bei Bedarf die Kommunikation unterbinden, wenn die Überwachung eine ungewollte Kommunikation entdeckt.

Der nicht verschlüsselnde Signalpfad beinhaltet bevorzugt somit lediglich passive Komponenten, Gatterlogik und digitale Signalprozessoren. Diese verfügen über eine schnelle Verarbeitungsgeschwindigkeit und eine geringe Verarbeitungsverzögerung. Eine sehr geringe Verarbeitungsverzögerung der Daten auf dem nicht verschlüsselnden Signalpfad wird so erreicht.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein beispielhaftes verschlüsselndes Funkgerät, und
- Fig. 2: ein Ausführungsbeispiel des erfindungsgemäßen Funkgeräts.

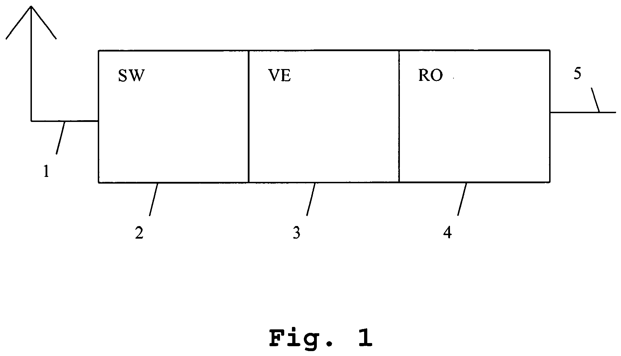

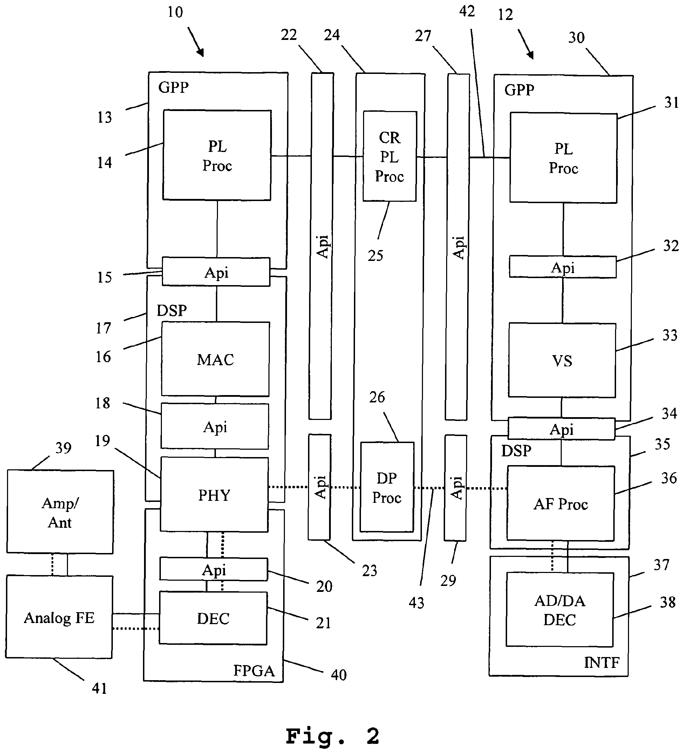

Zunächst werden anhand der Fig. 1 der Aufbau und die Funktionsweise eines herkömmlichen verschlüsselnden Funkgeräts und die der gegenwärtigen Erfindung zugrundeliegende Problematik erläutert. Anschließend werden mittels Fig. 2 der Aufbau und die Funktionsweise des erfindungsgemäßen Funkgeräts veranschaulicht. Identische Elemente wurden in ähnlichen Abbildungen z.T. nicht wiederholt dargestellt und beschrieben.

Ein exemplarisches verschlüsselndes Funkgerät wird in Fig. 1 dargestellt. Es besteht aus einer Antenne 1, einer schwarzen Seite 2, einer Verschlüsselungseinrichtung 3, einer roten Seite 4 und einem Dateneingang/-ausgang 5. Der Dateneingang/-ausgang 5 ist mit der roten Seite 4 verbunden. Die rote Seite 4 ist mit der Verschlüsselungseinrichtung 3 verbunden. Diese ist mit der schwarzen Seite 2 verbunden. Die Antenne 1 ist mit der schwarzen Seite 2 verbunden.

Die rote Seite 4 dient dabei der Verarbeitung unverschlüsselter Daten. So werden über den Dateneingang/- ausgang 5 im Sendefall unverschlüsselte Daten an die rote Seite 4 übermittelt. Diese führt eine Datenaufbereitung, z.B. eine Rauschunterdrückung oder eine Filterung, durch. Die noch immer unverschlüsselten, verarbeiteten Daten werden von der roten Seite 4 an die Verschlüsselungseinrichtung 3 übermittelt und von dieser verschlüsselt. Die nun verschlüsselten Daten werden von der Verschlüsselungseinrichtung 3 an die schwarze Seite 2 übertragen. Zu diesem Zeitpunkt handelt es sich bei den verschlüsselten Daten um binäre Signale. Um die verschlüsselten Daten auf ein Aussenden vorzubereiten, sind weitere Verarbeitungsschritte notwendig. So ist zumindest eine Modulation der verschlüsselten Daten notwendig. Diese Verarbeitungsschritte werden von der schwarzen Seite 2 durchgeführt. Die modulierten und anschließend in ein analoges Signal gewandelten verschlüsselten Daten werden von der schwarzen Seite 2 an die Antenne 1 übertragen und von dieser ausgesendet.

In Empfangsrichtung nehmen die Daten den umgekehrten Weg. Ein analoges Signal wird von der Antenne 1 empfangen. Es wird von der schwarzen Seite 2 demoduliert und ggf. weiterverarbeitet. Das demodulierte Signal wird an die Verschlüsselungseinrichtung 3 übertragen und von dieser entschlüsselt. Das entschlüsselte Signal wird weiter an die rote Seite 4 übertragen und von dieser weiterverarbeitet. Handelt es sich bei den Daten z.B. um ein Sprachsignal, so wird über den Dateneingang/-ausgang 5 das analoge unverschlüsselte Sprachsignal ausgegeben.

Soll bei einem solchen herkömmlichen Funkgerät eine besonders geringe Übertragungsverzögerung erreicht werden, so ist es auch dort möglich, unverschlüsselt Daten zu übertragen. Die Daten durchlaufen jedoch trotz dessen sämtliche Verarbeitungseinrichtungen des Funkgeräts. Es ist somit lediglich möglich, einen geringen Teil der Verarbeitungszeit einzusparen. Dabei trägt erheblich die Verarbeitung der Daten durch Mehrzweckprozessoren (GPP) zu der Verarbeitungsverzögerung bei.

In Fig. 2 wird ein Ausführungsbeispiel des erfindungsgemäßen Funkgeräts gezeigt. Eine Rote Seite 12 beinhaltet eine Schnittstellenschaltung 37, einen digitalen Signalprozessor 35 und einen Mehrzweckprozessor 30. Mit der roten Seite 12 verbunden ist eine Verschlüsselungseinrichtung 24. Diese ist wiederum verbunden mit einer schwarzen Seite 10. Die schwarze Seite 10 beinhaltet einen Mehrzweckprozessor 13, einen digitalen Signalprozessor 17 und eine feldprogrammierbare Gatterschaltung (FPGA) 40. Die rote Seite 10 ist weiterhin mit einer Analog-Verarbeitungseinrichtung 41 verbunden. Diese wiederum ist mit einer analogen Endstufe 39 verbunden.

Ein herkömmlicher, verschlüsselnder Signalpfad 42 läuft von der Schnittstellenschaltung 37 über den digitalen Signalprozessor 35, den Mehrzweckprozessor 30, die Verschlüsselungseinrichtung 24, den Mehrzweckprozessor 13, den digitalen Signalprozessor 17 und die feldprogrammierbare Gatterschaltung (FPGA) 40. Ein direkter, nicht verschlüsselnder Signalpfad 43 läuft dabei lediglich von der Schnittstellenschaltung 37 über den digitalen Signalprozessor 35, die Verschlüsselungseinrichtung 24, den digitalen Signalprozessor 17 und die feldprogrammierbare Gatterschaltung (FPGA) 40.

Die Schnittstellenschaltung 37 beinhaltet eine Verarbeitungseinrichtung 38. Die Verarbeitungseinrichtung 38 setzt sich dabei aus einem Analog-Digital-Wandler, einem Digital-Analog-Wandler und einer Dezimations-/Interpolationseinrichtung zusammen. Ein beispielhaftes auszusendendes Sprachsignal wird von dem Analog-Digital-Wandler digitalisiert. Die Dezimations-/Interpolationseinrichtung reduziert die Abtastwerte auf eine notwendige Anzahl von Abtastwerten. Das digitalisierte und dezimierte Signal wird an den digitalen Signalprozessor 35 weitergeleitet.

Der digitaler Signalprozessor 35 beinhaltet eine Sprachverarbeitungseinrichtung 36. Die Sprachverarbeitungseinrichtung 36 verarbeitet das eingehende digitalisierte und dezimierte Sprachsignal weiter. So führt sie beispielsweise eine automatische Pegelanpassung und/oder eine Mithörtongenerierung durch. Der digitale Signalprozessor 35 ist über eine Schnittstelle 34 mit dem Mehrzweckprozessor 30 verbunden. Die Schnittstelle 34 verbindet dabei die Sprachverarbeitungseinrichtung 36 mit einer Verarbeitungseinrichtung 33 innerhalb des Mehrzweckprozessors 30. Die Schnittstelle 34 überträgt das Signal von der Sprachverarbeitungseinrichtung 36 an die Verarbeitungseinrichtung 33. Diese passt das Datenformat an eine zu verwendende Wellenform an. So wird z.B. die Blockgröße eingestellt. Die Verarbeitungseinrichtung 33 ist über eine weitere Schnittstelle 32 mit einer Nutzdatenverarbeitungseinrichtung 31 ebenfalls innerhalb des Mehrzweckprozessors 30 verbunden. Über die Schnittstelle 32 wird das Signal an die Nutzdatenverarbeitungseinrichtung 31 übertragen. Diese führt weitere wellenformspezifische Verarbeitungsschritte durch. So werden hier z.B. eine Vorwärtsfehlerkorrektur und/oder ein Routing durchgeführt. Die Schnittstellenschaltung 37, der digitale Signalprozessor 35 und der Mehrzweckprozessor 30 bilden dabei gemeinsam die rote Seite 12 des Funkgeräts.

Über eine weitere Schnittstelle 27 ist die Nutzdatenverarbeitungseinrichtung 31 des Mehrzweckprozessors 30 mit einer verschlüsselten Nutzdatenverarbeitungseinrichtung 25 innerhalb der Verschlüsselungseinrichtung 24 verbunden. Die verschlüsselnde Nutzdatenverarbeitungseinrichtung 25 verschlüsselt das Signal. Sie ist über eine weitere Schnittstelle 22 weiterhin mit einer Nutzdatenverarbeitungseinrichtung 14 innerhalb des weiteren Mehrzweckprozessors 13 verbunden. Auch in dieser Verarbeitungseinrichtung 14 werden wellenformspezifische Verarbeitungsschritte durchgeführt. Auch hier kann z.B. ein Routing stattfinden. Über eine weitere Schnittstelle 15 ist die Verarbeitungseinrichtung 14 mit einer Mediumzugriffssteuerung 16 innerhalb des digitalen Signalprozessors 17 verbunden. Über die Schnittstelle 15 wird das Signal an die Mediumzugriffssteuerung 16 übertragen. Auch diese führt wellenformspezifische Verarbeitungsschritte an dem Signal durch. So kann hier z.B. eine Aufteilung in Zeitschlitze erfolgen. Die Mediumzugriffssteuerung 16 ist über eine weitere Schnittstelle 18 innerhalb des digitalen Signalprozessors 17 mit einer Modulationseinrichtung 19 verbunden. Teile der Modulationseinrichtung 19 befinden sich dabei ebenfalls innerhalb des digitalen Signalprozessors 17. Weitere Teile erstrecken sich dabei auf die feldprogrammierbare Gatterschaltung (FPGA) 40.

Die Modulationseinrichtung 19 führt dabei weitere wellenformspezifische Verarbeitungsschritte durch. Hier wird z.B. eine Modulation des Signals durchgeführt. Über eine weitere Schnittstelle 20 innerhalb des FPGA 40 ist die Modulationseinrichtung 19 mit einer Dezimations-/Interpolationseinrichtung 21 verbunden. Diese führt eine Interpolation des auszusendenden Signals durch. So werden zwischen bestehenden Signalpunkten weitere Punkte generiert. Die Dezimations-/Interpolationseinrichtung 21 ist weiterhin mit einer Analog-Verarbeitungseinrichtung 41 außerhalb des FPGA 40 verbunden. Die Analog-Verarbeitungseinrichtung 41 wandelt das Signal dabei in ein analoges Signal um und überträgt es an eine mit ihr verbundene analoge Endstufe 39. Die analoge Endstufe 39 beinhaltet einen Leistungsverstärker und eine Antenne. Das analoge Signal wird von dem Leistungsverstärker verstärkt und über die Antenne ausgesandt.

Ein empfangenes Signal durchläuft dabei den umgekehrten Signalpfad. Es wird von der analogen Endstufe 39 empfangen und verstärkt. Die Analog-Verarbeitungseinrichtung 41 wandelt es in ein digitales Signal und überträgt es an die Dezimations-/Interpolationseinrichtung 21, welche die Abtastpunkt reduziert. Das Signal wird an die Modulationseinrichtung 19 weitergeleitet, welche das Signal demoduliert. Das Signal wird an die Mediumzugriffssteuerung 16 übertragen. Diese führt wellenformspezifische Verarbeitungsschritte an dem Signal durch. So kann hier z.B. Zusammenführung des Signals aus verschiedenen Zeitschlitzen erfolgen. Das Signal wird anschließend an die Nutzdatenverarbeitungseinrichtung 14 weitergeleitet. Auch in dieser Verarbeitungseinrichtung 14 werden wellenformspezifische Verarbeitungsschritte, z.B. ein Routing, durchgeführt.

Das Signal wird nun an die verschlüsselnde Nutzdatenverarbeitungseinrichtung 25 übertragen. Diese entschlüsselt das Signal und leitet es an die Nutzdatenverarbeitungseinrichtung 31 weiter. Auch in dieser Verarbeitungseinrichtung 31 werden wellenformspezifische Verarbeitungsschritte, z.B. ein Routing, durchgeführt. Das Signal wird daraufhin an die Verarbeitungseinrichtung 33 weitergeleitet. Diese passt das Datenformat der verwendenden Wellenform an die weitere Verarbeitung an. Das Signal wird daraufhin von der Sprachverarbeitungseinrichtung 36 verarbeitet. So führt sie beispielsweise eine automatische Pegelanpassung und/oder eine Unterdrückung des Ausgangssignals bei mangelnder Empfangsqualität (squelch). Abschließend wird das Signal der Verarbeitungseinrichtung 38 zugeführt. Diese erhöht die Anzahl der Abtastpunkte und wandelt es in ein analoges Signal.

Die Verarbeitung durch die Schnittstellenschaltung 37, die digitalen Signalprozessoren 35, 17 und durch das FPGA 40 erfolgt dabei mit hoher Geschwindigkeit. Durch diese Verarbeitungsschritte entsteht keine nennenswerte Verarbeitungsverzögerung. Die Verarbeitung durch die Mehrzweckprozessoren 13, 30 erzeugen jedoch eine nennenswerte Übertragungsverzögerung. Auch die Verschlüsselung durch die verschlüsselnde Nutzdatenverarbeitungseinrichtung 25 innerhalb der Verschlüsselungseinrichtung 24 erzeugt eine große Verarbeitungsverzögerung. Um eine Übertragung mit möglichst geringer Übertragungsverzögerung zu erreichen, werden diese Verarbeitungsschritte somit ausgespart. Signale werden über einen direkten, nicht verschlüsselnden Signalpfad 43 übertragen.

Ein auszusendendes Signal wird von der Sprachverarbeitungseinrichtung 36 innerhalb des digitalen Signalprozessors 35 direkt über eine Schnittstelle 29 an eine nicht-verschlüsselnde Verarbeitungseinrichtung 26 innerhalb der Verschlüsselungseinrichtung 24 übertragen. Die nicht-verschlüsselnde Verarbeitungseinrichtung 26 leitet die Signale lediglich weiter und führt keine Veränderung der Signale durch. Lediglich eine Überwachung der übertragenen Signale findet statt. So kann verhindert werden, dass ungültige oder ungewollte Signale übertragen werden. Die nicht verschlüsselnde Verarbeitungseinrichtung 26 überträgt die Signale mittels einer weiteren Schnittstelle 23 direkt an die Modulationseinrichtung 19 innerhalb des digitalen Signalprozessors 17 und des FPGA 40.

Die Signale durchlaufen ab dann dieselben Schritte wie zuvor beschrieben. Da für komplexe Wellenformen essentielle Verarbeitungsschritte bei diesem direkten Signalpfad 43 ausgelassen werden, kann er nur für einfache Wellenformen eingesetzt werden. Auch können die Signale so nicht verschlüsselt werden. Es ist jedoch möglich, bereits verschlüsselte Daten der Schnittstellenschaltung 37 zuzuführen und über den direkten Pfad zu übertragen. Auch bei Nutzung des direkten Pfades durchlaufen empfangene Signale den umgekehrten Pfad.

Statt einer Nutzung für Sprachsignale können ebenso bereits digital vorhandene Daten übertragen werden. In diesem Fall wird der Analog-Digital-Wandler bzw. Digital-Analog-Wandler innerhalb der Verarbeitungseinrichtung 38 übersprungen. Auch eine Dezimation muss in diesem Fall nicht stattfinden. Bei Nutzung des direkten, nicht verschlüsselnden Signalpfades 43 sind so Übertragungsverzögerungen von lediglich wenigen Mikrosekunden möglich.

Die Erfindung ist nicht auf das dargestellte Ausführungsbeispiel beschränkt. Alle vorstehend beschriebenen Merkmale oder in den Figuren gezeigten Merkmale sind im Rahmen der Erfindung beliebig vorteilhaft miteinander kombinierbar. Die Erfindung ist durch die anhängenden Ansprüche definiert.

## Patentansprüche

1. Funkgerät mit zumindest einem ersten und zweiten Mehrzweckprozessor (13, 30), einer Verschlüsselungseinrichtung (24) und einem ersten und zweiten digitalen Signalprozessor (17, 35) und einer feldprogrammierbaren Gatterschaltung (40),
wobei das Funkgerät einen verschlüsselnden Signalpfad (42) und einen nicht verschlüsselnden Signalpfad (43) aufweist,
**dadurch gekennzeichnet,**
**dass** der nicht verschlüsselnde Signalpfad von der Schnittstellenschaltung (37) über den ersten digitalen Signalprozessor (35) und die Verschlüsslungseinrichtung (24) direkt an die Modulationseinrichtung (19) läuft,
**dass** der nicht verschlüsselnde Signalpfad (43) eine Verarbeitungseinrichtung (26) enthält, die Signale weiterleitet und durch Überwachen verhindert, dass ungültige oder ungewollte Signale übertragen werden, dass die Verschlüsselungseinrichtung (24) im verschlüsselnden Signalpfad (42) eine verschlüsselnde Nutzdatenverarbeitungseinrichtung (25) enthält und dass der verschlüsselnde Signalpfad (42) wellenformspezifische Verarbeitungsschritte durchführt.

2. Funkgerät nach Anspruch 1,
**dadurch gekennzeichnet,**
**dass** der nicht verschlüsselnde Signalpfad (43) die Verschlüsselungseinrichtung (24) aufweist,
**dass** die Verschlüsselungseinrichtung (24) keine Verschlüsselung und/oder Entschlüsselung von über den nicht verschlüsselnden Signalpfad (43) übertragenen Signalen durchführt, und
**dass** die Verschlüsselungseinrichtung (24) über den nicht verschlüsselnden Signalpfad (43) übertragene Signale überwacht.

3. Funkgerät nach einem der Ansprüche 1 bis 2,
**dadurch gekennzeichnet,**
**dass** der nicht verschlüsselnde Signalpfad (43) den ersten digitalen Signalprozessor (35) und/oder die feldprogrammierbare Gatterschaltung (40) aufweist.

4. Funkgerät nach einem der Ansprüche 1 bis 3,
**dadurch gekennzeichnet,**
**dass** der verschlüsselnde Signalpfad (42) zumindest den ersten und zweiten Mehrzweckprozessor (13, 30) und den ersten und zweiten digitalen Signalprozessor (17, 35) und/oder die feldprogrammierbare Gatterschaltung (40) und die Verschlüsselungseinrichtung (24) aufweist.

5. Funkgerät nach einem der Ansprüche 1 bis 4,
**dadurch gekennzeichnet,**
**dass** das Funkgerät weiterhin eine Schnittstellenschaltung (37) aufweist,
**dass** die Schnittstellenschaltung (37) eine Verarbeitungseinrichtung (38) aufweist,
**dass** die Verarbeitungseinrichtung (38) einen Analog-Digital-Wandler und/oder einen Digital-Analog-Wandler aufweist, und
**dass** die Schnittstellenschaltung (37) mit dem ersten digitalen Signalprozessor (35) verbunden ist.

6. Funkgerät nach einem der Ansprüche 1 bis 5,
**dadurch gekennzeichnet,**
**dass** der erste digitale Signalprozessor (35) eine Sprachverarbeitungseinrichtung (36) aufweist, dass die Sprachverarbeitungseinrichtung (36) eine automatische Pegelanpassung und/oder eine Mithörtongenerierung durchführt.

7. Funkgerät nach einem der Ansprüche 1 bis 6,
**dadurch gekennzeichnet,**
**dass** der erste Mehrzweckprozessor (30) eine Verarbeitungseinrichtung (33) aufweist und
**dass** die Verarbeitungseinrichtung (33) ein Datenformat auszusendender und/oder empfangener Daten anpasst.

8. Funkgerät nach einem der Ansprüche 1 bis 7,
**dadurch gekennzeichnet,**
**dass** der erste Mehrzweckprozessor (30) eine Nutzdatenverarbeitungseinrichtung (31) aufweist, und dass die Nutzdatenverarbeitungseinrichtung (31) ein Routing auszusendender und/oder empfangener Daten durchführt.

9. Funkgerät nach einem der Ansprüche 1 bis 8,
**dadurch gekennzeichnet,**
**dass** die Verschlüsselungseinrichtung (24) eine verschlüsselnde Nutzdatenverarbeitungseinrichtung (25) und eine nicht verschlüsselnde Verarbeitungseinrichtung (26) beinhaltet,
**dass** die verschlüsselnde Nutzdatenverarbeitungseinrichtung (25) auszusendende Daten verschlüsselt und empfangene Daten entschlüsselt und
**dass** die nicht verschlüsselnde Verarbeitungseinrichtung (26) auszusendende Daten und empfangene Daten überwacht.

10. Funkgerät nach Anspruch 9,
**dadurch gekennzeichnet,**
**dass** der verschlüsselnde Signalpfad (42) die verschlüsselnde Nutzdatenverarbeitungseinrichtung (25) beinhaltet, und dass der nicht verschlüsselnde Signalpfad (43) die nicht verschlüsselnde Verarbeitungseinrichtung (26) beinhaltet.

11. Funkgerät nach einem der Ansprüche 1 bis 10,
**dadurch gekennzeichnet,**
**dass** der zweite Mehrzweckprozessor (13) eine Nutzdatenverarbeitungseinrichtung (14) aufweist und dass die Nutzdatenverarbeitungseinrichtung (14) ein Routing auszusendender und/oder empfangener Daten durchführt.

12. Funkgerät nach einem der Ansprüche 1 bis 11,
**dadurch gekennzeichnet,**
**dass** der zweite digitale Signalprozessor (17) eine Mediumzugriffssteuerung (16) aufweist.

13. Funkgerät nach einem der Ansprüche 1 bis 12,
**dadurch gekennzeichnet,**
**dass** der zweite digitale Signalprozessor (17) zumindest einen Teil einer Modulationseinrichtung (19) aufweist.

14. Funkgerät nach einem der Ansprüche 1 bis 13,
**dadurch gekennzeichnet,**
**dass** die feldprogrammierbare Gatterschaltung (40) zumindest einen Teil einer Modulationseinrichtung (19) aufweist und
**dass** die feldprogrammierbare Gatterschaltung (40) eine Dezimations-/Interpolationseinrichtung (21) aufweist.

## Claims

1. Radio device with at least a first and second general-purpose processor (13, 30), an encoding unit (24) and a first and second digital signal processor (17, 35) and a field-programmable gate array (40),
wherein the radio device comprises an encoding signal path (42) and a non-encoding signal path (43),
**characterised in that**
the non-encoding signal path runs from the interface circuit (37) via the first digital signal processor (35) and the encoding unit (24) directly to the modulation unit (19),
**in that** the non-encoding signal path (43) comprises a processing unit (26) which passes on signals and by monitoring prevents invalid or undesired signals being transmitted,
**in that** the encoding unit (24) in the encoding signal path (42) comprises an encoding useful data processing unit (25) and
**in that** the encoding signal path (42) carries out waveformspecific processing steps.

2. Radio device according to claim 1,
**characterised in that**
the non-encoding signal path (43) comprises the encoding unit (24),
**in that** the encoding unit (24) carries out no encoding and/or decoding of signals transmitted via the non-encoding signal path (43), and
**in that** the encoding unit (24) monitors signals transmitted via the non-encoding signal path (43).

3. Radio device according to one of claims 1 to 2,
**characterised in that**
the non-encoding signal path (43) comprises the first digital signal processor (35) and/or the field-programmable gate array (40).

4. Radio device according to one of claims 1 to 3,
**characterised in that**
the encoding signal path (42) comprises at least the first and second general-purpose processor (13, 30) and the first and second digital signal processor (17, 35) and/or the field-programmable gate array (40) and the encoding unit (24) .

5. Radio device according to one of claims 1 to 4,
**characterised in that**
the radio device also comprises an interface circuit (37), **in that** the interface circuit (37) comprises a processing unit (38),
**in that** the processing unit (38) comprises an analog-to-digital converter and/or a digital-to-analog converter, and **in that** the interface circuit (37) is connected with the first digital signal processor (35).

6. Radio device according to one of claims 1 to 5,
**characterised in that**
the first digital signal processor (35) comprises a speech processing unit (36),
**in that** the speech processing unit (36) carries out automatic level matching and/or monitoring sound generation.

7. Radio device according to one of claims 1 to 6,
**characterised in that**
the first general-purpose processor (30) comprises a processing unit (33) and
**in that** the processing unit (33) matches a data format for data to be transmitted and/or received data.

8. Radio device according to one of claims 1 to 7,
**characterised in that**
the first general-purpose processor (30) comprises a useful data processing unit (31), and
**in that** the useful data processing unit (31) carries out routing of data to be transmitted and/or received data.

9. Radio device according to one of claims 1 to 8,
**characterised in that**
the encoding unit (24) comprises an encoding useful data processing unit (25) and a non-encoding processing unit (26),
**in that** the encoding useful data processing unit (25) encodes data to be transmitted and decodes received data and
**in that** the non-encoding processing unit (26) monitors data to be transmitted and received data.

10. Radio device according to claim 9,
**characterised in that**
the encoding signal path (42) comprises the encoding useful data processing unit (25), and
**in that** the non-encoding signal path (43) comprises the non-encoding processing unit (26).

11. Radio device according to one of claims 1 to 10,
**characterised in that**
the second general-purpose processor (13) comprises a useful data processing unit (14) and
**in that** the useful data processing unit (14) carries out routing of data to be transmitted and/or received data.

12. Radio device according to one of claims 1 to 11,
**characterised in that**
the second digital signal processor (17) comprises a medium access control (16).

13. Radio device according to one of claims 1 to 12,
**characterised in that**
the second digital signal processor (17) comprises at least a part of a modulation unit (19).

14. Radio device according to one of claims 1 to 13,
**characterised in that**
the field-programmable gate array (40) comprises at least a part of a modulation unit (19) and
**in that** the field-programmable gate array (40) comprises a decimation/interpolation unit (21).

## Revendications

1. Appareil radio comprenant au moins un premier et un deuxième processeur polyvalent (13, 30), un dispositif de chiffrement (24) et un premier et deuxième processeur de signal numérique (17, 35) et un circuit de porte programmable (40), dans lequel l'appareil radio comprend un chemin de signal chiffrant (42) et un chemin de signal non chiffrant (43),
**caractérisé**
**en ce que** le chemin de signal non chiffrant s'étend du circuit d'interface (37) directement au dispositif de modulation (19) en passant par le premier processeur de signal numérique (35) et le dispositif de chiffrement (24),
**en ce que** le chemin de signal non chiffrant (43) contient un dispositif de traitement (26), qui transfère les signaux et empêche par surveillance que des signaux invalides ou intempestifs soient transmis,
**en ce que** le dispositif de chiffrement (24) contient dans le chemin de signal chiffrant (42) un dispositif de traitement de données utiles chiffrant (25), et
**en ce que** le chemin de signal chiffrant (42) met en oeuvre des étapes de traitement spécifiques à la forme d'onde.

2. Appareil radio selon la revendication 1,
**caractérisé**
**en ce que** le chemin de signal non chiffrant (43) comprend le dispositif de chiffrement (24),
**en ce que** le dispositif de chiffrement (24) ne réalise pas de chiffrement et/ou de déchiffrement de signaux transmis par le chemin de signal non chiffrant (43), et
**en ce que** le dispositif de chiffrement (24) surveille les signaux transmis par le chemin de signal non chiffrant (43).

3. Appareil radio selon l'une des revendications 1 à 2,
**caractérisé**
**en ce que** le chemin de signal non chiffrant (43) comprend le premier processeur de signal numérique (35) et/ou le circuit de porte programmable (40).

4. Appareil radio selon l'une des revendications 1 à 3,
**caractérisé**
**en ce que** le chemin de signal chiffrant (42) comprend au moins le premier et le deuxième processeur polyvalent (13, 30) et le premier et le deuxième processeur de signal numérique (17, 35) et/ou le circuit de grille programmable (40) et le dispositif de chiffrement (24).

5. Appareil radio selon l'une des revendications 1 à 4,
**caractérisé**
**en ce que** l'appareil radio comprend en outre un circuit d'interface (37),
**en ce que** le circuit d'interface (37) comprend un dispositif de traitement (38),
**en ce que** le dispositif de traitement (38) comprend un convertisseur analogique-numérique et/ou un convertisseur numérique-analogique, et
**en ce que** le circuit d'interface (37) est relié au premier processeur de signal numérique (35).

6. Appareil radio selon l'une des revendications 1 à 5,
**caractérisé**
**en ce que** le premier processeur de signal numérique (35) comprend un dispositif de traitement vocal (36),
**en ce que** le dispositif de traitement vocal (36) réalise une adaptation automatique du niveau et/ou une génération de son d'écoute.

7. Appareil radio selon l'une des revendications 1 à 6,
**caractérisé**
**en ce que** le premier processeur polyvalent (30) comprend un dispositif de traitement (33) et
**en ce que** le dispositif de traitement (33) adapte un format de données des données à envoyer et/ou reçues.

8. Appareil radio selon l'une des revendications 1 à 7,
**caractérisé**
**en ce que** le premier processeur polyvalent (30) comprend un dispositif de traitement de données utiles (31), et
**en ce que** le dispositif de traitement de données utiles (31) réalise un routage des données à envoyer et/ou reçues.

9. Appareil radio selon l'une des revendications 1 à 8,
**caractérisé**
**en ce que** le dispositif de chiffrement (24) comporte un dispositif de traitement des données utiles chiffrant (25) et un dispositif de traitement non chiffrant (26),
**en ce que** le dispositif de traitement des données utiles chiffrant (25) chiffre les données à envoyer et déchiffre les données reçues et
**en ce que** le dispositif de traitement non chiffrant (26) surveille les données à envoyer et les données reçues.

10. Appareil radio selon la revendication 9,
**caractérisé**
**en ce que** le chemin de signal chiffrant (42) comporte le dispositif de traitement des données utiles chiffrant (25),
et **en ce que** le chemin de signal non chiffrant (43) comporte le dispositif de traitement non chiffrant (26).

11. Appareil radio selon l'une des revendications 1 à 10,
**caractérisé**
**en ce que** le deuxième processeur polyvalent (13) présente un dispositif de traitement de données utiles (14) et
**en ce que** le dispositif de traitement de données utiles (14) réalise un routage des données à envoyer et/ou reçues.

12. Appareil radio selon l'une des revendications 1 à 11,
**caractérisé**
**en ce que** le deuxième processeur de signal numérique (17) présente une commande d'accès au support (16).

13. Appareil radio selon l'une des revendications 1 à 12,
**caractérisé**
**en ce que** le deuxième processeur de signal numérique (17) comprend au moins une partie d'un dispositif de modulation (19).

14. Appareil radio selon l'une quelconque des revendications 1 à 13,
**caractérisé**
**en ce que** le circuit de grille programmable (40) comprend au moins une partie d'un dispositif de modulation (19) et
**en ce que** le circuit de grille programmable (40) comprend un dispositif de décimation/d'interpolation (21).
